# EUROPÄISCHE PATENTSCHRIFT

(11) **EP 3 367 759 B1**
(45) Veröffentlichungstag und Bekanntmachung des Hinweises auf die Patenterteilung: **20.01.2021**
(21) Anmeldenummer: 18156600.1
(22) Anmeldetag: 14.02.2018
(51) Int. Cl.: H05B 47/11, F21V 23/04

(54) **BELEUCHTUNGSSYSTEM MIT OPTISCHEN SENSOR ZUR ERKENNUNG VON VERHALTENSMUSTER**
ILLUMINATION SYSTEM WITH AN OPTICAL SENSOR FOR DETECTING PATTERNS OF BEHAVIOUR
SYSTÈME D'ÉCLAIRAGE POURVU DE CAPTEUR OPTIQUE PERMETTANT DE DÉTECTER UN MODÈLE DE COMPORTEMENT

(30) Priorität: 27.02.2017 AT 432017 U
(43) Veröffentlichungstag der Anmeldung: 29.08.2018
(73) Patentinhaber: Tridonic GmbH & Co. KG, 6851 Dornbirn (AT)
(72) Erfinder: Moosmann, Florian, 6835 Muntlix (AT); Lochmann, Frank, 88147 Esseratsweiler (DE)
(74) Vertreter: Rupp, Christian

(56) Entgegenhaltungen:
- DE-C1- 19 837 930
- US-A- 4 593 232
- US-A1- 2015 250 041

## Beschreibung

Die Erfindung betrifft ein Beleuchtungssystem gemäß dem Oberbegriff des Anspruchs 1 und einem Verfahren zum Betreiben eines Leuchtmittels nach Anspruch 5.

### Technisches Gebiet

Betriebsgeräte für Leuchtmittel, wie Vorschaltgeräte oder Konverter, haben eine beschränkte Lebensdauer, in der Regel beträgt diese Lebensdauer 50 000 Betriebsstunden. Oftmals ist aber die Lebensdauer der Betriebsgeräte größer als die 50 000 Betriebsstunden. Nun müssen die ersten Betriebsgeräte nach etwa 50 000 Betriebsstunden gewechselt werden und andere Betriebsgeräte erst wesentlich später. Betriebsgeräte einer Generation werden nur für einen begrenzten Zeitraum von den Anbietern von Betriebsgeräte verkauft, so dass ein Austausch der Betriebsgeräte dazu führt, dass ein Beleuchtungssystem Betriebsgeräte verschiedener Generationen aufweist, welche womöglich verschiedene Verhaltenscharakteristiken aufweisen.

### Stand der Technik

Es sind aus der EP2335454 B1 Treiber-Module bekannt, welcher ein LED-Modul betreiben. Das LED-Modul kann einen Speicher aufweisen, auf dem die Informationen über das zu betreibende LED-Modul enthalten sind. Bei einem Ausfall des Treiber-Modules kann das neue Treiber-Modul auf die Informationen des Speichers zurückgreifen, um eine gleichmäßige Ausleuchtung einer Fläche zu gewährleisten.

Es besteht ein Bedarf an Vorrichtungen, Systemen und Verfahren, die ein vereinfachtes Austauschen von Betriebsgeräte für Leuchtmittel ermöglichen. Es besteht insbesondere ein Bedarf an derartigen Vorrichtungen, Systemen und Verfahren, die selbstständig das gewünschte Betriebsverhalten konfigurieren können, ohne ein zeitintensives manuelles Konfigurieren erforderlich ist. Insbesondere sollen Betriebsgeräte einer neuen Generation dasselbe Verhalten wie die Betriebsgeräte der alten Generation aufweisen. Dies hat den Vorteil, dass bei Ausfall eines oder wenigen Betriebsgeräte nicht die gesamte Anlage ausgetauscht werden muss, um ein identisches Betriebsverhalten zu gewährleisten.

Nach Ausführungsbeispielen wird vorgesehen, dass ein Beleuchtungssystem ein selbstständiges konfigurieren des Betriebsverhalten ermöglicht.
Die vorliegende Erfindung stellt daher ein System und ein Verfahren bereit, die dieser Situation Rechnung trägt und die Kosten und die Zeit für die Installation von Betriebsgeräten neuerer Generation gesenkt werden.

Die Druckschrift DE 198 37 930 C1 offenbart eine Beleuchtungssteuervorrichtung, insbesondere für die Verwendung in Filmstudios. Mit der Beleuchtungssteuervorrichtung können zwei Beleuchtungseinheiten mit einer Lichtquelle synchronisiert werden. Die Lichtquelle ist dabei eine Kerze oder eine andere Art von Lichtquelle, die einen Feuerschein erzeugen kann.

Die Druckschrift US 4,593,232 A offenbart eine Beleuchtungseinrichtung, welche eine oder mehrere Lichtquellen umfasst, die das Licht einer Flamme simulieren. Dabei kann eine Helligkeit und ein Flackern der Beleuchtungseinrichtung eingestellt werden.

Die Druckschrift US 2015/0250041 A1 offenbart ein Verfahren und ein System zum Einstellen einer Beleuchtung, insbesondere in einem Filmstudio, wobei eine 3-dimensionale Referenzumgebung mit einer Umgebungsbelichtung erzeugt und eine Charakteristik dieser Umgebungsbelichtung erfasst wird. Auf Basis der erfassten Charakteristik kann dann eine physikalische Belichtung angesteuert werden.

### Darstellung der Erfindung

Es ist die Aufgabe der vorliegenden Erfindung, ein gegenüber dem Stand der Technik verbessertes Beleuchtungssystem bereitzustellen, welche auf einfache Art und Weise ein vereinfachtes Austauschen von Betriebsgeräten für Leuchtmittel mittels einer selbstständigen Konfiguration des Betriebsverhalten, aufweist.
Diese Aufgabe wird erfindungsgemäß durch die Merkmale der unabhängigen Ansprüche gelöst. Die abhängigen Ansprüche bilden den zentralen Gedanken der Erfindung in besonders vorteilhafter Weise weiter.

Gemäß einem ersten Aspekt der Erfindung weist ein Beleuchtungssystem mit mindestens einem Leuchtmittel, insbesondere einer LED,
a) einen Konverter zur Steuerung des mindestens einem Leuchtmittels,
b) ein optischer Sensor,und
c) eine Speichereinheit auf, wobei das Beleuchtungssystem in einem Normalbetrieb und einem Imitationsbetrieb betreibbar ist, wobei der Normalbetrieb des Beleuchtungssystems einen Betrieb mit einem vorgegebenen, unveränderten Verhaltensmuster des mindestens einen Leuchtmittels darstellt, und wobei im Imitationsbetrieb des Beleuchtungssystems der Konverter mittels des optischen Sensors ein Verhaltensmuster von benachbarten Leuchten und/oder lichtemittierenden Gegenständen erfasst und auf Basis dieser Erfassung das mindestens eine Leuchtmittel derart steuert, dass ein identisches Verhaltensmuster des mindestens einen Leuchtmittels vorliegt, wobei das Verhaltensmuster ein Startverhalten und/oder eine Beleuchtungsstärke und/oder eine Lichtfarbe und/oder ein Flackerverhalten ist.

Das Beleuchtungssystem so konfiguriert ist, dass ein Benutzer mittels eines mobilen Gerätes 10 eine Beschränkung der Erfassungsrichtung des optischen Sensor 3 vorgeben kann.

Das Verhaltensmuster kann auf einer Speichereinheit gespeichert werden und später von einem Benutzer mittels einem mobilen Gerät, insbesondere Smartphone, abgerufen werden.

Das Verhaltensmuster kann einem Typ des Konverters entsprechen und von einem mobilen Gerät abgerufen werden.

Der Benutzer kann den Normalbetrieb des Beleuchtungssystem oder den Imitationsbetrieb mit dem mobilen Gerät über eine Schnittstelle einstellen.

Das Verhaltensmuster des Imitationsbetriebs kann auf Basis einer wiederholten Erfassung des optischen Sensors veränderlich sein.

Des Weiteren wird ein Verfahren zum Betreiben wenigstens eines Leuchtmittels, insbesondere einer LED mit folgenden Schritten:
a) Einstellung einer Betriebsart, wobei die Betriebsart ein Normalbetrieb oder ein Imitationsbetrieb ist, wobei der Normalbetrieb einen Betrieb mit einem vorgegebenen, unveränderten Verhaltensmuster des mindestens einen Leuchtmittels darstellt,
b) Erfassung eines Verhaltensmusters im Imitationsbetrieb,
wobei im Imitationsbetrieb das Verhaltensmuster mittels eines optischen Sensors von benachbarten Leuchten und/oder lichtemittierenden Gegenständen erfasst wird und auf Basis dieser Erfassung das mindestens eine Leuchtmittel derart angesteuert wird, dass ein identisches Verhaltensmuster des mindestens einen Leuchtmittels vorliegt,
wobei das Verhaltensmuster ein Startverhalten und/oder eine Beleuchtungsstärke und/oder eine Lichtfarbe und/oder ein Flackerverhalten ist,
wobei ein Benutzer mittels eines mobilen Gerätes eine Beschränkung der Erfassungsrichtung des optischen Sensors vorgeben kann.

Die Erfindung wird nunmehr auch mit Bezug auf die Figuren beschrieben. Dabei zeigen:
Fig. 1 eine Ausgestaltung der erfindungsgemäßen Beleuchtungssystems,
Fig. 2 schematisch ein mobiles Gerät ausgebildet als Smartphone.

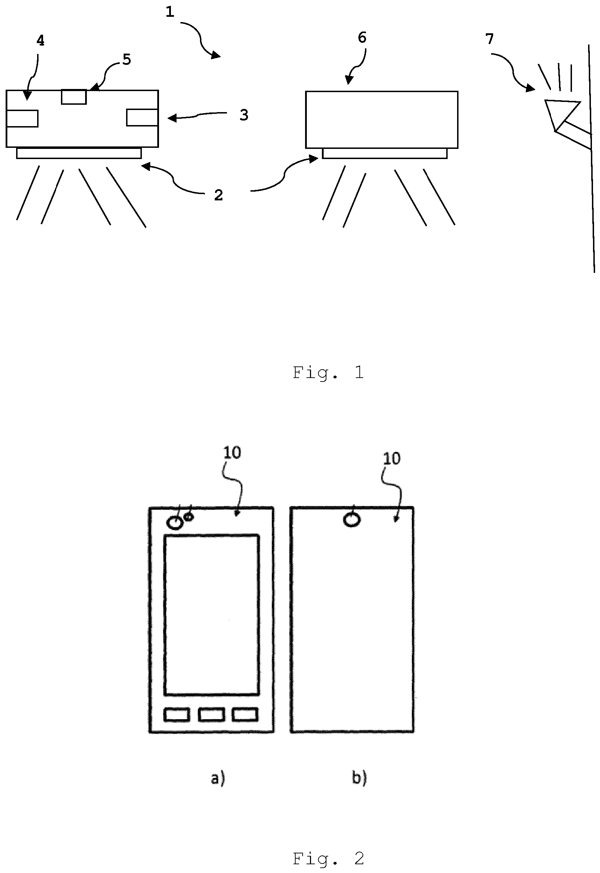

Gemäß Fig. 1 wird ein Beleuchtungssystem mit mindestens einem Leuchtmittel 2, insbesondere einer LED, einer LED Strecke oder einer Gasentladungslampe, mit einem Konverter 4 zur Steuerung des mindestens einem Leuchtmittels 2, einem optischen Sensor 3, einer Speichereinheit 5 wobei der Konverter 4 mittels des optischen Sensors 3 Verhaltensmuster von benachbarten Leuchten 6 und/oder lichtemittierenden Gegenständen 7 erfassen kann und auf Basis dieser Erfassung das mindest eine Leuchtmittel 2 derart steuern kann, dass ein identisches Verhaltensmuster des mindest einem Leuchtmittels 2 vorliegen kann, gezeigt. Der optische Sensor 3 kann ein Helligkeitssensor oder eine Kamera, insbesondere eine 360° Kamera, sein. Als lichtemittierenden Gegenständen kann eine Fackel, ein Lagerfeuer, ein Kaminfeuer, ein Feuerzeug, etc. in Frage kommen. Die benachbarten Leuchten 6 können innerhalb desselben Beleuchtungssystem liegen oder einem anderen Beleuchtungssystem angehören.

Das Verhaltensmuster kann auf der Speichereinheit 5 gespeichert werden und kann später von einem Benutzer mittels eines mobilen Gerätes 10, insbesondere ein Smartphone, abgerufen werden. Die Speichereinheit 5 kann in dem Konverter 4 integriert sein oder extern angeordnet sein. Insbesondere kann die Speichereinheit 5 eine Cloud darstellen, in der die Verhaltensmuster abgespeichert werden können.

Das Verhaltensmuster ist ein Startverhalten und/oder eine Beleuchtungsstärke und/oder eine Lichtfarbe und/oder ein Flackerverhalten sein. Das Startverhalten einer älteren Generation eines Konverters 4 kann Unterschiede in Bezug auf eine Vorheizzeit, bei der die Wendeln einer Gasentladungslampe vor dem Zünden vorgeheizt werden, der Anzahl der Zündversuche der Gasentladungslampe oder eine unterschiedliche Zeitdauer vom Einschalten der Netzspannung bis zur Abgabe des Lichtes durch das mindest eine Leuchtmittel 2 haben. Konverter für LED können beim Startverhalten Unterschiede in der Zeitdauer vom Einschalten der Netzspannung bis zur Abgabe des Lichtes durch das mindest eine Leuchtmittel 2 haben.

Das Verhaltensmuster kann einem Typ des Konverters 4 entsprechen und von einem mobilen Gerät 10 abgerufen werden. Dadurch kann auch eine Generation des Konverters 4 bestimmt werden. Der Typ bzw. die Generation des Konverters 4 wird durch das Verhaltensmuster welches mit dem optischen Sensor 3 erfasst werden kann, bestimmt werden. So kann beispielsweise ein Konverter mit einer relativen langen Zeitdauer vom Einschalten der Netzspannung bis zur Abgabe des Lichtes durch das mindest eine Leuchtmittel 2 auf eine bestimmte (ältere) Generation hinweisen.

Der Benutzer kann einen Normalbetrieb des Beleuchtungssystem oder einen Imitationsbetrieb mit dem mobilen Gerät 10 über eine Schnittstelle einstellen. Die Schnittstelle kann dabei drahtgebunden oder drahtlos ausgestaltet sein. Als mögliche Schnittstellen kann eine DALI/DSI Schnittstelle, eine Ethernet Schnittstelle, WLAN, Funk, Bluetooth, NFC, usw. in Frage kommen. Die Schnittstelle kann eine Verbindung des mobilen Gerätes 10 mit dem Konverter 4 sein oder eine Verbindung des mobilen Gerätes 10 mit dem Speichereinheit 5. Die Speichereinheit 5 kann ebenfalls eine Schnittstelle aufweisen und mit dem Konverter 4 zu kommunizieren, insbesondere kann die Speichereinheit 5 ein gespeichertes Verhaltensmuster an den Konverter 4 übermitteln.

Der Normalbetrieb kann einen Betrieb mit vorgegebenen unveränderten Verhaltensmuster darstellen. Insbesondere kann der Normalbetrieb eine Werkseinstellung des Konverters 4 sein.

Der Imitationsbetrieb kann einen Betrieb mit veränderlichen Verhaltensmuster entsprechen, welcher auf Basis einer wiederholten Erfassung des optischen Sensors 3 veränderlich ist. Dabei kann der Imitationsbetrieb die Erfassung eines Verhaltensmuster durch den optischen Sensor 3 mit der Speicherung des Verhaltensmuster in die Speichereinheit 5 beinhalten und der Einstellung der Lichtabgabe des mindest einem Leuchtmittel 2 des durch den optischen Sensors 3 ermittelten Verhaltensmuster. Denkbar ist es, das bei Vorliegen eines gespeicherten Verhaltensmuster in der Speichereinheit 5, keine weitere Erfassung eines Verhaltensmuster durch den optischen Sensor 3 erfolgt, sondern das gespeicherte Verhaltensmuster herangezogen wird. Eine Erfassung eines Verhaltensmuster soll erst bei Löschung des Verhaltensmuster in der Speichereinheit 5 erfolgen oder durch einen Befehl des Benutzers mittels des mobilen Gerätes 10. Dann können zwei oder mehrere Verhaltensmuster in der Speichereinheit 5 gespeichert werden und der Benutzer kann eine Auswahl zur Verwendung des gewünschten Verhaltensmuster treffen. Alternativ soll es aber möglich sein, dass bei Einstellung des Imitationsbetriebs eine Erfassung eines Verhaltensmusters durch den optischen Sensor 3 und Speicherung in der Speichereinheit 5 erfolgen kann und bereits vorhandene Verhaltensmuster in der Speichereinheit 5 überschrieben werden.

Dadurch ist es auch möglich, dass eine benachbarte Leuchte 6 einen in den Figuren nicht gezeigten Bewegungsmelder enthält und aufgrund einer Bewegungserkennung das Licht einschaltet und der optische Sensor 3 aufgrund dessen ein Verhaltensmuster erkennt und der Konverter 4 das mindest eine Leuchtmittel 2 ebenfalls aktiviert.

Des Weiteren soll es möglich sein, dass bei gleichzeitigem Vorhandensein einer benachbarten Leuchte 6 und eines lichtemittierenden Gegenstandes 7 der optische Sensor 3 dasjenige Verhaltensmuster erfassen und speichern kann welche sich räumlich am nächsten oder am weitesten zum optischen Sensor 3 befindet. Dabei kann der optische Sensor 3, welcher als 360° Kamera ausgestaltet sein kann, die vorhanden benachbarten Leuchten 6 und/oder lichtemittierenden Gegenstände 7 erfassen. Insbesondere kann der optische Sensor 3 aus zwei 360° Kameras bestehen und durch Differenzbildung bzw. Triangulation der zwei Kameras die Entfernung der erfassten Leuchten 6 und/oder lichtemittierenden Gegenständen 7 bestimmen.

Alternativ kann der optische Sensor 3 dasjenige Verhaltensmuster erfassen, welches am dominantesten ist. Ein Verhaltensmuster kann dominant sein, wenn es eine hohe Beleuchtungsstärke aufweist oder eine große Fläche auf dem Sensor 3 abbildet.

Des Weiteren wird ein entsprechendes Verfahren zum Betreiben wenigstens eines Leuchtmittels 2, insbesondere einer LED, einer LED Strecke oder einer Gasentladungslampe, aufweisend mit folgenden Schritten:
a) Einstellung einer Betriebsart, wobei die Betriebsart ein Normalbetrieb oder ein Imitationsbetrieb ist, wobei der Normalbetrieb einen Betrieb mit einem vorgegebenen, unveränderten Verhaltensmuster des mindestens einen Leuchtmittels darstellt,
b) Erfassung eines Verhaltensmusters im Imitationsbetrieb, wobei im Imitationsbetrieb das Verhaltensmuster mittels eines optischen Sensors von benachbarten Leuchten und/oder lichtemittierenden Gegenständen erfasst wird und auf Basis dieser Erfassung das mindestens eine Leuchtmittel derart angesteuert wird, dass ein identisches Verhaltensmuster des mindestens einen Leuchtmittels vorliegt, wobei das Verhaltensmuster ein Startverhalten und/oder eine Beleuchtungsstärke und/oder eine Lichtfarbe und/oder ein Flackerverhalten ist, wobei ein Benutzer mittels eines mobilen Gerätes eine Beschränkung der Erfassungsrichtung des optischen Sensors vorgeben kann.

## Patentansprüche

1. Beleuchtungssystem mit mindestens einem Leuchtmittel (2), insbesondere einer LED, aufweisend:
a) einen Konverter (4) zur Steuerung des mindestens einem Leuchtmittels (2),
b) ein optischer Sensor (3), und
c) eine Speichereinheit (5),
wobei das Beleuchtungssystem in einem Normalbetrieb und einem Imitationsbetrieb betreibbar ist,
wobei der Normalbetrieb des Beleuchtungssystems einen Betrieb mit einem vorgegebenen, unveränderten Verhaltensmuster des mindestens einen Leuchtmittels (2) darstellt, und
wobei im Imitationsbetrieb des Beleuchtungssystems der Konverter (4) mittels des optischen Sensors (3) ein Verhaltensmuster von benachbarten Leuchten (6) und/oder lichtemittierenden Gegenständen (7) erfasst und auf Basis dieser Erfassung das mindestens eine Leuchtmittel (2) derart steuert, dass ein identisches Verhaltensmuster des mindestens einen Leuchtmittels (2) vorliegt, wobei das Verhaltensmuster ein Startverhalten und/oder eine Beleuchtungsstärke und/oder eine Lichtfarbe und/oder ein Flackerverhalten ist,
**dadurch gekennzeichnet, dass**
das Beleuchtungssystem so konfiguriert ist, dass ein Benutzer mittels eines mobilen Gerätes (10) eine Beschränkung der Erfassungsrichtung des optischen Sensors (3) vorgeben kann.

2. Beleuchtungssystem nach Anspruch 1,
**dadurch gekennzeichnet,**
**dass** im Imitationsbetrieb das erfasste Verhaltensmuster auf der Speichereinheit (5)gespeichert werden kann und später von dem Benutzer mittels dem mobilen Gerät (10), insbesondere Smartphone, abgerufen werden kann.

3. Beleuchtungssystem nach Anspruch 1 oder 2,
**dadurch gekennzeichnet,**
**dass** der Benutzer den Normalbetrieb des Beleuchtungssystem, oder den Imitationsbetrieb mit dem mobilen Gerät (10) über eine Schnittstelle einstellen kann.

4. Beleuchtungssystem nach Anspruch 3,
**dadurch gekennzeichnet,**
**dass** das Verhaltensmuster des Imitationsbetriebs auf Basis einer wiederholten Erfassung des optischen Sensors (3) veränderlich ist.

5. Verfahren zum Betreiben wenigstens eines Leuchtmittels (2), insbesondere einer LED, aufweisend mit folgenden Schritten:
a) Einstellung einer Betriebsart, wobei die Betriebsart ein Normalbetrieb oder ein Imitationsbetrieb ist, wobei der Normalbetrieb einen Betrieb mit einem vorgegebenen, unveränderten Verhaltensmuster des mindestens einen Leuchtmittels (2) darstellt,
b) Erfassung eines Verhaltensmusters im Imitationsbetrieb,
wobei im Imitationsbetrieb das Verhaltensmuster mittels eines optischen Sensors (3) von benachbarten Leuchten (6) und/oder lichtemittierenden Gegenständen (7) erfasst wird und auf Basis dieser Erfassung das mindestens eine Leuchtmittel (2) derart angesteuert wird, dass ein identisches Verhaltensmuster des mindestens einen Leuchtmittels (2) vorliegt,
wobei das Verhaltensmuster ein Startverhalten und/oder eine Beleuchtungsstärke und/oder eine Lichtfarbe und/oder ein Flackerverhalten ist,
**dadurch gekennzeichnet, dass**
ein Benutzer mittels eines mobilen Gerätes (10) eine Beschränkung der Erfassungsrichtung des optischen Sensors (3) vorgeben kann.

## Claims

1. Illumination system with at least one illuminant (2), in particular an LED, comprising:
a) a converter (4) for controlling the at least one illuminant (2),
b) an optical sensor (3), and
c) a memory unit (5),
wherein the illumination system can be operated in a normal operating mode and in an imitation operating mode,
wherein the normal operating mode of the illumination system represents an operating mode with a prespecified, unchanged behavior pattern of the at least one illuminant (2), and
wherein, in the imitation operating mode of the illumination system, the converter (4) detects a behavior pattern of adjacent luminaires (6) and/or light-emitting objects (7) by means of the optical sensor (3) and controls the at least one illuminant (2) on the basis of this detection in such a way that an identical behavior pattern of the at least one illuminant (2) is present, wherein the behavior pattern is a starting behavior and/or an illumination intensity and/or a light color and/or a flickering behavior,
**characterized in that**
the illumination system is configured such that a user can specify a limitation of the detection direction of the optical sensor (3) by means of a mobile device (10).

2. Illumination system according to Claim 1,
**characterized in that**
in the imitation operating mode, the detected behavior pattern can be stored in the memory unit (5) and can later be retrieved by the user by means of the mobile device (10), in particular a smartphone.

3. Illumination system according to Claims 1 or 2,
**characterized in that**
the user can set the normal operating mode of the illumination system, or the imitation operating mode, with the mobile device (10) via an interface.

4. Illumination system according to Claim 3,
**characterized in that**
the behavior pattern of the imitation operating mode is variable on the basis of a repeated detection by the optical sensor (3).

5. Method for operating at least one illuminant (2), in particular an LED, comprising the following steps:
a) setting an operating mode, wherein the operating mode is a normal operating mode or an imitation operating mode, wherein the normal operating mode represents an operating mode with a prespecified, unchanged behavior pattern of the at least one illuminant (2),
b) detecting a behavior pattern in the imitation operating mode,
wherein, in the imitation operating mode, the behavior pattern of adjacent luminaires (6) and/or light-emitting objects (7) is detected by means of an optical sensor (3) and, on the basis of this detection, the at least one illuminant (2) is controlled in such a way that an identical behavior pattern of the at least one illuminant (2) is present,
wherein the behavior pattern is a starting behavior and/or an illumination intensity and/or a light color and/or a flickering behavior,
**characterized in that**
a user can specify a limitation of the detection direction of the optical sensor (3) by means of a mobile device (10).

## Revendications

1. Système d'éclairage comprenant au moins une source de lumière (2), en particulier une DEL, comprenant :
a) un convertisseur (4) pour la commande de l'au moins une source de lumière (2),
b) un capteur optique (3) et
c) une unité de mémoire (5),
le système d'éclairage pouvant fonctionner selon un mode normal et selon un mode d'imitation,
le mode normal du système d'éclairage représentant un fonctionnement avec un modèle de comportement prédéfini et inchangé de l'au moins une source de lumière (2) et,
dans le mode d'imitation du système d'éclairage, le convertisseur (4) détectant, au moyen du capteur optique (3), un modèle de comportement de lampes (6) et/ou d'objets électroluminescents (7) adjacents et, sur la base de cette détection, commandant l'au moins une source de lumière (2) de manière à produire un modèle de comportement identique de l'au moins une source de lumière (2), le modèle de comportement étant un comportement au démarrage et/ou une intensité d'éclairage et/ou une couleur de lumière et/ou un comportement de clignotement,
**caractérisé en ce que**
le système d'éclairage est configuré de manière à ce qu'un utilisateur puisse définir une limitation de la direction de détection du capteur optique (3) au moyen d'un appareil mobile (10).

2. Système d'éclairage selon la revendication 1,
**caractérisé en ce**
**que** dans le mode d'imitation, le modèle de comportement détecté peut être mémorisé dans l'unité de mémoire (5) et appelé plus tard par l'utilisateur au moyen de l'appareil mobile (10), en particulier un téléphone intelligent.

3. Système d'éclairage selon la revendication 1 ou 2,
**caractérisé en ce**
**que** l'utilisateur peut régler le mode normal du système d'éclairage ou le mode d'imitation avec l'appareil mobile (10) par le biais d'une interface.

4. Système d'éclairage selon la revendication 3,
**caractérisé en ce**
**que** le modèle de comportement du mode d'imitation peut être modifié sur la base d'une détection répétée du capteur optique (3).

5. Procédé pour faire fonctionner au moins une source de lumière (2), en particulier une DEL, comprenant les étapes suivantes :
a) réglage d'un mode de fonctionnement, le mode de fonctionnement étant un mode normal ou un mode d'imitation, le mode normal représentant un fonctionnement avec un modèle de comportement prédéfini inchangé de l'au moins une source de lumière (2),
b) détection d'un modèle de comportement dans le mode d'imitation,
dans le mode d'imitation, le modèle de comportement de lampes (6) et/ou objets électroluminescents (7) adjacents étant détecté au moyen d'un capteur optique (3) et, sur la base de cette détection, l'au moins une source de lumière (2) étant commandée de manière à produire un modèle de comportement identique de l'au moins une source de lumière (2),
le modèle de comportement étant un comportement au démarrage et/ou une intensité d'éclairage et/ou une couleur de lumière et/ou un comportement de clignotement,
**caractérisé en ce que**
un utilisateur peut définir une limitation de la direction de détection du capteur optique (3) au moyen d'un appareil mobile (10).
